# EUROPEAN PATENT SPECIFICATION

(11) **EP 0 664 234 B1**
(45) Date of publication and mention of the grant of the patent: **07.01.1998**
(21) Application number: 95250012.2
(22) Date of filing: 21.01.1995
(51) Int. Cl.: B60J 1/18

(54) **Procedure for fixing a window sheet, such as a glass or plastic sheet , to flexible material, and corresponding fixing arrangement**
Verfahren zur Befestigung einer Fensterscheibe, wie z.B. einer Glas- oder Kunststoffscheibe, an flexiblem Material, und entsprechende Befestigungsanordnung
Méthode de fixation d'un panneau de fenêtre, comme p.ex. un panneau en verre ou en plastique, à un matériel flexible, et dispositif de fixation correspondant

(30) Priority: 25.01.1994 FI 94368
(43) Date of publication of application: 26.07.1995
(73) Proprietor: Valmet Automotive Oy, 23500 Uusikaupunki (FI)
(72) Inventor: Kinnanen, Matti, 23501 Uusikaupunki (FI)
(74) Representative: Patentanwälte Wenzel & Kalkoff

(56) References cited:
- EP-A- 0 372 374
- EP-A- 0 372 375
- DE-U- 9 203 530

## Description

The present invention concerns a procedure as defined in the preamble to Claim 1. The invention further concerns a fixing arrangement as defined in the preamble to Claim 5.

In prior art a procedure is known for fixing a rigid and hard window sheet, such as a glass or plastic sheet, to flexible material, such as fabric or equivalent, in said prior art procedure, the window sheet is provided with a separate frame, the window sheet is mounted in this frame and the frame is fixed to the fabric by cementing or by mechanical fixing members, which involves the necessity of stitching metal eyes to the fabric and fixing these e.g. with screws to corresponding eyes on the frame.

The problem embarrassing the procedures and fixing arrangements of prior art is that the fixing of the window to fabric has heretofore been exceedingly laborious and involves a plurality of work steps.

The object of the invention is to eliminate the drawbacks mentioned.

The object of the invention is specifically to disclose a procedure and a fixing arrangement for fixing a window sheet to flexible material in such a way that the fixing can be accomplished simply and with few work steps.

The procedure of the invention is characterized by that which is stated in Claim 1. The fixing arrangement of the invention is characterized by that which is stated in Claim 5.

In the procedure of the invention for fixing a window sheet, such as a glass or plastic sheet, to flexible material, such as fabric or equivalent, a tough plastic film is laminated to the window sheet, and as taught by the invention, the plastic film that is laminated to the window sheet is so disposed that a strip of said plastic film extends out beyond the margin of the window sheet, and the flexible material is fixed to this projecting strip. Correspondingly, in the fixing arrangement, as taught by the invention the plastic film is disposed to extend as a strip beyond the margin of the window sheet and the flexible material is fixed to this strip.

The advantage afforded by the invention is that when the window sheet consists e.g. of glass, the laminating foil known e.g. from conventional multi-ply glasses can be used, in addition to its laminating function, to the purpose of affixing the fabric as well, by dimensioning the foil to be somewhat larger than the glass sheet. It is then possible by means of the glazing lamination process to achieve without extra cost a finished window sheet that can be fixed to fabric. There is a multitude of applications of the present invention which can be contemplated. It concerns the fixing of a transparent window to any flexible material whatsoever, which may be fabric or plastic or equivalent soft or semi-hard material Applications that can be contemplated include the fixing of the rear window to the fabric top of an open automobile, fixing a window to tarpaulins or canopies of vehicles (a tarpaulin is understood to be any protective cover, partition, tarpaulin or equivalent intended to furnish protection against weather conditions, moisture or theft), fixing a tent window to the tent cloth, fixing the window of a tarpaulin-walled edifice stretched over a frame, fixing a window to the cover sheet, canopy, sail etc. of a boat.

Fixing flexible material, such as fabric, to the window sheet with the aid of a strip projecting from the margin of the window sheet gives opportunities to use a great variety of fixing methods which have not been feasible heretofore. Thus, the flexible material may be fixed to the strip by a mechanical fixing method, such as by stitching, framing, riveting, screwing, with snaps, by Velcro, or equally by some adhesive fixing method, such as cementing, plastic casting or intermittent hot welding.

If stitching is the fixing method used, a sealing compound ribbon is placed upon the plastic film strip before it is joined by stitching to the flexible material. The sealing compound ribbon contains a solid flowing compound which immediately after the needle has come out of the holes surrounds the thread and seals the hole in the fabric and that in the plastic film through which the thread passes.

The window sheet may be a multi-ply structure comprising two sheets and between them a plastic film cemented to both sheets. The window sheet may equally be a single-ply structure comprising one sheet on the surface of which the plastic film has been cemented. The window sheet may consist of glass, such as silicate glass. The glass may be hardened or unhardened. The window sheet may equally consist of plastic, such as polycarbonate (PC) or polymethylmethacrylate (PMMA). The window sheet may equally be a sandwich structure composed of a glass sheet and a plastic sheet which have been laminated together.

The plastic film may be a conventional lamination plastic foil of the kind used in multi-ply safety glasses (VSG), such as a polyvinylbutyral foil (PVB). The plastic film may equally consist of polycarbonate (PC). The inherent properties of the plastic film extending over the area of the window include naturally good optic characteristics, and toughness.

The window may also comprise electrical resistance heating. In that case the window sheet comprises a set of heating resistance wires, connected to the plastic film. The electrical connectors of the wire array are disposed on the strip extending out beyond the margin of the window sheet.

The lamination plastic film may also be used to form a flexible and translucent hinge between adjacent window sheets in that two or more window sheets are laminated to a given plastic film or given plastic films with a certain spacing so that the intervening part of the plastic film allows the window sheets to be turned to form an angle with each other.

In the following the invention is described in detail, referring to the attached drawing, wherein
Fig. 1 presents schematically and sectioned in a direction at right angles against the window sheet, an embodiment of the fixing arrangement of the invention;
Fig. 2 presents schematically and sectioned in a direction at right angles against the window sheet, another embodiment of the fixing arrangement of the invention; and
Fig. 3 presents schematically and sectioned in a direction at right angles against the window sheet, a third embodiment of the fixing arrangement of the invention.

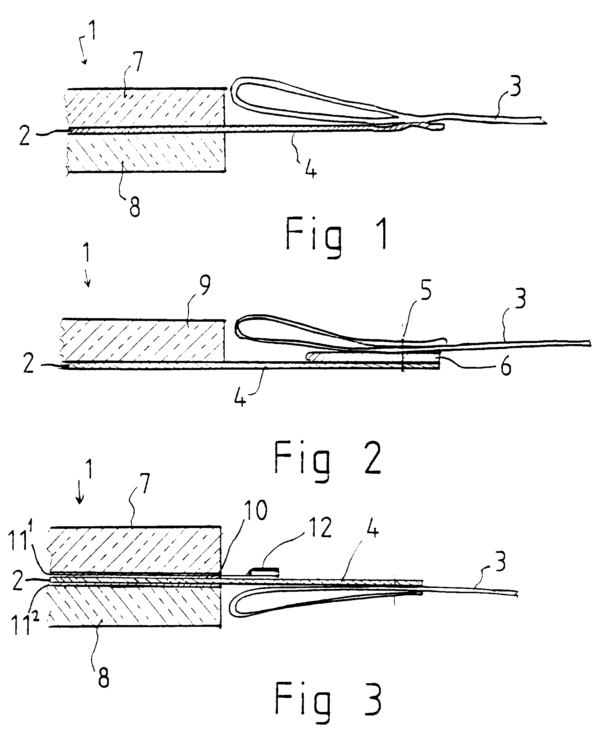

Figs 1-3 depict a fixing arrangement by which a window sheet 1 to which has been laminated a tough plastic film 2 can be fixed to a flexible material 3, such as fabric or equivalent. Part of the plastic film 2 has been disposed to extend as a strip 4 beyond the margin of the window sheet 1. The flexible material 3 has been fixed to the strip 4.

In Fig. 1 the flexible material 3 has been fixed to the strip 4 by intermittent hot welding, in which the substance of the flexible material, e.g. of a fabric 3 of synthetic material, has been fused to the substance of the plastic film 2. In the embodiment of Fig. 1 the window sheet 1 has been formed of two silicate glass sheets 7 and 8 which have been laminated to each other with an interposed plastic film 2, which is a conventional lamination plastic film of the kind used in multi-ply safety glasses (VSG), such as a polyvinylbutyral foil (PVB).

Fig. 2 displays a fixing arrangement in which the window sheet 1 is a sandwich structure with one plastic sheet 9, e.g. of polycarbonate PC or polymethylmethacrylate PMMA. On the surface of the plastic sheet 9 has been cemented a clearly thinner plastic film 2. Here, the flexible fabric material 3 has been fixed to the strip 4 by suturing with stitches 5. Between the strip 4 and the fabric 3 is interposed a sealing compound ribbon 6 for sealing the stitching.

In Fig. 3 the window sheet is a multi-ply structure comprising two glass sheets 7,8, between which is interposed a plastic film 2 from which a strip 4 projects to a distance from the margins of the sheets. A sandwich structure with five layers has under the upper sheet 7 a lamination plastic layer 11¹, under which lies the above-mentioned plastic film 2, under this another lamination plastic layer 11², and under this the second glass sheet 8. Since in this case the lamination plastic layers 11 are not of sufficiently durable material as regards e.g. tearing strength, weather resistance, UV resistance or any other similar consideration to enable a fabric fixing strip 4 to be formed thereof e.g. for stitching, an additional plastic film 2 has been fixed to the structure in the way as described. Here, the window sheet 1 is heatable, the window sheet 1 comprising a set of heating resistance wires 10, connected to the plastic film 11. The electric connections 12 of the heating resistance wires 10 have been carried to a part of the strip 4 extending beyond the margin of the window sheet.

The invention is not delimited to concern exclusively the embodiment examples presented in the foregoing: numerous modifications are feasible within the scope of the inventive idea defined by the claims.

## Claims

1. A procedure for fixing a window sheet, such as a glass or plastic sheet, to flexible material, such as fabric or equivalent, a tough plastic film being laminated to said window sheet, characterized in that the plastic film laminated to the window sheet is so disposed that a strip of the plastic film extends out beyond the margin of the window sheet and the flexible material is fixed to said projecting strip.

2. Procedure according to claim 1, characterized in that the flexible material is fixed to the strip by a mechanical fixing method, such as by stitching, framing, riveting, screwing, with snaps, with Velcro.

3. Procedure according to claim 1, characterized in that the flexible material is fixed to the strip by an adhesive fixing method, such as by cementing, plastic casting or intermittent hot welding.

4. Procedure according to any one of claims 1-3, characterized in that before the flexible material is stitched to the plastic film a sealing compound ribbon is cemented between them for sealing the stitches.

5. A fixing arrangement for fixing a window sheet (1) to which a tough plastic film (2) has been laminated, to a flexible material (3), such as fabric or equivalent, characterized in that part of the plastic film (2) has been disposed to extend as a strip (4) out beyond the margin of the window sheet (1), and that the flexible material (3) is fixed to the strip (4).

6. Fixing arrangement according to claim 5, characterized in that the flexible material (3) is fixed to the strip (4) by means of mechanical fixing members (5), such as stitches, a frame, rivets, screws, snaps, Velcro.

7. Fixing arrangement according to claim 5, characterized in that the flexible material (3) is fixed to the strip (4) by an adhesive fixing method, such as cementing, plastic casting or intermittent hot welding.

8. Fixing arrangement according to any one of claims 5-7, characterized in that the fixing arrangement comprises a sealing compound ribbon (6), placed between the flexible material (3) and the strip (4).

9. Fixing arrangement according to any one of claims 5-8, characterized in that the window sheet (1) is a multi-ply structure comprising two sheets (7,8) with an interposed plastic film (2) cemented to both sheets.

10. Fixing arrangement according to any one of claims 5-8, characterized in that the window sheet (1) is a single-ply structure comprising one sheet (9) on the surface of which a plastic film (2) has been cemented.

11. Fixing arrangement according to any one of claims 5-10, characterized in that the window sheet (1) consists of glass, such as silicate glass.

12. Fixing arrangement according to any one of claims 5-11, characterized in that the window sheet (1) consists of plastic, such as polycarbonate (PC) or polymethylmethacrylate (PMMA).

13. Fixing arrangement according to any one of claims 5-12, characterized in that the plastic film (2) is a conventional lamination plastic foil used in multiply safety glasses (VSG), such as a polyvinylbutyral foil (PVB).

14. Fixing arrangement according to any one of claims 5-12, characterized in that the plastic film (2) consists of polycarbonate (PC).

15. Fixing arrangement according to any one of claims 5-14, characterized in that the window sheet is heatable, the window sheet (1) comprising a set of heating resistance wires (10), connected to a plastic film (2; 11), and that the electrical connectors (12) of the heating resistance wires (10) are disposed on a strip (4) extending out beyond the margin of the window sheet.

## Patentansprüche

1. Ein Verfahren zum Befestigen einer Fensterscheibe, wie einer Glas- oder Kunststoffscheibe, an flexiblem Material, wie Gewebe oder ähnlichem, wobei ein fester Kunststoffilm auf die Fensterscheibe laminiert wird, **dadurch gekennzeichnet,** daß der auf die Fensterscheibe laminierte Kunststoffilm so angeordnet wird, daß ein Streifen des Kunststoffilms sich über den Rand der Fensterscheibe hinaus erstreckt, und das flexible Material an dem vorspringenden Streifen befestigt wird.

2. Verfahren nach Anspruch 1, **dadurch gekennzeichnet,** daß das flexible Material an dem Streifen durch ein mechanisches Befestigungsverfahren, wie durch Heften, Rahmen, Nieten, Schrauben, mit Klemmitteln, mittels Klettverschluß, befestigt wird.

3. Verfahren nach Anspruch 1, **dadurch gekennzeichnet,** daß das flexible Material an dem Streifen durch ein Haftbefestigungsverfahren, wie durch Kleben, Kunststoffgießen oder intermittierendes Warmschweißen befestigt wird.

4. Verfahren nach einem der Ansprüche 1-3, **dadurch gekennzeichnet,** daß vor dem Heften des flexiblen Materials an den Kunststoffilm ein dichtendes Verbundband zwischen diese geklebt wird, um die Heftungen abzudichten.

5. Eine Befestigungsanordnung zum Befestigen einer Fensterscheibe (1), auf die ein fester Kunststoffilm (2) laminiert worden ist, an einem flexiblen Material (3), wie Gewebe oder ähnlichem, **dadurch gekennzeichnet,** daß ein Teil des Kunststoffilms (2) so angeordnet ist, daß er sich als ein Streifen (4) über den Rand der Fensterscheibe (1) hinaus erstreckt, und daß das flexible Material (3) an dem Streifen (4) befestigt ist.

6. Befestigungsanordnung nach Anspruch 5, **dadurch gekennzeichnet,** daß das flexible Material (3) an dem Streifen mittels mechanischer Befestigungsteile (5), wie Heftungen, einem Rahmen, Nieten, Schrauben, Klemmitteln, Klettverschluß, befestigt ist.

7. Befestigungsanordnung nach Anspruch 5, **dadurch gekennzeichnet,** daß das flexible Material (3) an dem Streifen (4) mittels eines Haftbefestigungsverfahrens, wie Kleben, Kunststoffgießen, intermittierendem Warmschweißen, befestigt ist.

8. Befestigungsanordnung nach einem der Ansprüche 5-7, **dadurch gekennzeichnet,** daß die Befestigungsanordnung ein dichtendes Verbundband (6) umfaßt, das zwischen dem flexiblen Material (3) und dem Streifen (4) plaziert ist.

9. Befestigungsanordnung nach einem der Ansprüche 5-8, **dadurch gekennzeichnet,** daß die Fensterscheibe (1) eine Mehrschichtstruktur ist, die eine Schicht (9) umfaßt, auf deren Oberfläche ein Kunststofffilm (2) aufgeklebt ist.

10. Befestigungsanordnung nach einem der Ansprüche 5-8, **dadurch gekennzeichnet,** daß die Fensterscheibe (1) eine Einschichtstruktur ist, die eine Schicht (9) umfaßt, auf deren Oberfläche ein Kunststofffilm (2) aufgeklebt ist.

11. Befestigungsanordnung nach einem der Ansprüche 5-10, **dadurch gekennzeichnet,** daß die Fensterscheibe (1) aus Glas, wie Silikatglas, besteht.

12. Befestigungsanordnung nach einem der Ansprüche 5-11, **dadurch gekennzeichnet,** daß die Fensterscheibe (1) aus Kunststoff, wie Polycarbonat (PC) oder Polymethylmethacrylat (PMMA), besteht.

13. Befestigungsanordnung nach einem der Ansprüche 5-12, **dadurch gekennzeichnet,** daß der Kunststoffilm (2) eine herkömmliche Laminier-Kunststofffolie, die bei Mehrschicht-Sicherheitsglas (VSG) verwendet wird, wie zum Beispiel eine Polyvinylbutyralfolie (PVB), ist.

14. Befestigungsanordnung nach einem der Ansprüche 5-12, **dadurch gekennzeichnet,** daß der Kunststoffilm (2) aus Polycarbonat (PC) besteht.

15. Befestigungsanordnung nach einem der Ansprüche 5-14, **dadurch gekennzeichnet,** daß die Fensterscheibe beheizbar ist, wobei die Fensterscheibe (1) eine Reihe Heiz-Widerstandsdrähte (10) umfaßt, die mit einem Kunststoffilm (2; 11) verbunden sind, und daß die elektrischen Verbinder (12) der Heiz-Widerstandsdrähte (10) auf einem Streifen angeordnet sind, der sich über den Rand der Fensterscheibe hinaus erstreckt.

## Revendications

1. Procédé permettant de fixer un panneau de fenêtre, comme un panneau en verre ou en plastique, à un matériau flexible, comme un tissu ou un matériau équivalent, un film plastique résistant étant placé en couches sur ledit panneau de fenêtre, caractérisé en ce que le film plastique placé en couches sur le panneau de fenêtre est disposé de telle sorte qu'une bande de film plastique s'étend au-delà de la limite du panneau de fenêtre et en ce que le matériau flexible est fixé à ladite bande en saillie.

2. Procédé selon la revendication 1, caractérisé en ce que le matériau flexible est fixé à la bande par un procédé de fixation mécanique, par exemple par couture, encadrement, rivetage, vissage, avec des pressions, du Velcro.

3. Procédé selon la revendication 1, caractérisé en ce que le matériau flexible est fixé à la bande par un procédé de fixation adhésive, par exemple par cémentation, coulage de plastique ou soudage à chaud discontinu.

4. Procédé selon l'une quelconque des revendications 1 à 3, caractérisé en ce que, avant que le matériau flexible soit cousu au film plastique, un ruban de matériau d'étanchéité est cémenté entre eux pour rendre les coutures étanches.

5. Agencement de fixation permettant de fixer un panneau de fenêtre (1), sur lequel a été placé en couches un film plastique résistant (2), à un matériau flexible (3), comme un tissu ou un matériau équivalent, caractérisé en ce qu'une partie du film plastique (2) a été disposée de façon à s'étendre comme une bande (4) au-delà de la limite du panneau de fenêtre (1), et en ce que le matériau flexible (3) est fixé à la bande (4).

6. Agencement de fixation selon la revendication 5, caractérisé en ce que le matériau flexible (3) est fixé à la bande (4) au moyen d'éléments de fixation mécanique (5) comme des points de couture, des cadres, des rivets, des vis, des pressions et du Velcro.

7. Agencement de fixation selon la revendication 5, caractérisé en ce que le matériau flexible (3) est fixé à la bande (4) par un procédé de fixation adhésive, comme la cémentation, le coulage de plastique ou le soudage à chaud discontinu.

8. Agencement de fixation selon l'une quelconque des revendications 5 à 7, caractérisé en ce que l'agencement de fixation comprend un ruban de matériau d'étanchéité (6) placé entre le matériau flexible (3) et la bande (4).

9. Agencement de fixation selon l'une quelconque des revendications 5 à 8, caractérisé en ce que le panneau de fenêtre (1) est une structure à couches multiples comprenant deux panneaux (7, 8), un film plastique interposé (2) étant cémenté sur les deux panneaux.

10. Agencement de fixation selon l'une quelconque des revendications 5 à 8, caractérisé en ce que le panneau de fenêtre (1) est une structure à une seule couche comprenant un panneau (9) sur la surface duquel un film plastique (2) a été cémenté.

11. Agencement de fixation selon l'une quelconque des revendications 5 à 10, caractérisé en ce que le panneau de fenêtre (1) est composé de verre, par exemple du verre au silicate.

12. Agencement de fixation selon l'une quelconque des revendications 5 à 11, caractérisé en ce que le panneau de fenêtre (1) est composé de plastique, par exemple du polycarbonate (PC) ou du polyméthylméthacrylate (PMMA).

13. Agencement de fixation selon l'une quelconque des revendications 5 à 12, caractérisé en ce que le film plastique (2) est une feuille de plastique en couches classique utilisée dans les verres de sécurité à couches multiples (VSG), comme une feuille de polyvinylbutyral (PVB).

14. Agencement de fixation selon l'une quelconque des revendications 5 à 12, caractérisé en ce que le film plastique (2) est composé de polycarbonate (PC).

15. Agencement de fixation selon l'une quelconque des revendications 5 à 14, caractérisé en ce que le panneau de fenêtre peut être chauffé, le panneau de fenêtre (1) comprenant un ensemble de fils à résistance chauffante (10) connecté à un film plastique (2 ; 11) et en ce que les connecteurs électriques (12) des fils à résistance chauffante (11) sont disposés sur une bande (4) s'étendant au-delà de la limite du panneau de fenêtre.
